# EUROPEAN PATENT APPLICATION

(11) **EP 4 663 613 A1**
(43) Date of publication of application: **17.12.2025**
(21) Application number: 24020199.6
(22) Date of filing: 13.06.2024
(51) Int. Cl.: C03C 1/00, C03B 1/02, C03C 13/06

(54) **A BRIQUETTE COMPRISING MINERAL WOOL, A METHOD OF PRODUCING IT AND A PRODUCTION LINE FOR CARRYING OUT THE METHOD**

(71) Applicant: Advanced Green Technologies Sp. z o.o., 09-400 Plock (PL)
(72) Inventor: WILKANOWICZ, Sabina, 80-215 Gdansk (PL); KAZMIEROWSKI, Hubert, 09-400 Plock (PL)
(74) Representative: Marcinska-Porzuc, Aleksandra

(57) **Abstract**

The subject of the invention is a briquette comprising mineral wool, preferably waste mineral wool, characterized in that it contains, in dry matter, up to 34% w/w of all alkali compounds derived from mineral wool and from the addition of metal hydroxide or metal hydroxides selected from the group consisting of metals of the 1st and 2nd group of the periodic table, which are the sole binder of the briquette. The subject of the invention is also the method of producing a briquette comprising mineral wool, preferably waste mineral wool, characterized in that the mineral wool is ground, homogenized and sieved through a sieve and homogeneous mineral wool fibers with the size of less than 5 mm, and in particular not more than 2 mm, in an amount of 50% to 90% w/w, are mixed with the binder in an amount of from 1% to 50% w/w, while the binder being an aqueous solution of at least one metal hydroxide selected from the group consisting of metals of the 1st and 2nd group of the periodic table, the concentration of which ranges from 5% to 50% w/w, and then from the resulting wet mass, briquettes are formed, which are subjected to a maturing process. The subject of the invention is also a production line for carrying out the described method.

## Description

### Field of the invention

The subject of the invention is briquette comprising mineral wool, for example recycled, in particular industrial waste wool, method of manufacture of such briquette and a production line for implementing the said briquette production method.

The term 'waste mineral wool' shall be understood as referring to any waste, residues arising from mineral wool production processes including the manufacture of its fibers. Recycled mineral wool is a broader concept and applies not only to industrial waste, but also, for example construction and renovation works, obtained after the demolition of buildings, etc. The invention is especially dedicated to the reprocessing of waste mineral wool, but It can also be recycled wool, i.e. municipal selective system waste collection.

Rock wool is a mineral fiber used mainly in construction as thermal insulation or as part of fire protection. It is obtained by melting a natural raw material at a temperature of about 1600°C in a melting furnace, usually in a shaft furnace. The molten material is then subjected to centrifugal force in order to the manufacture of fibers which constitute the final product.

Many industrial processes of obtaining the mineral wool use a feedstock mineral raw material in the form of briquettes, not natural materials. Such a solution shall apply in particular when strict restrictions are imposed on the composition of the final product.

Currently, waste, surplus or rejects of mineral wool and residual materials coming from other industries are pressed into briquettes (prefabricated element), which are then fed into the shaft furnace to be transformed back into mineral wool. The use of natural mineral materials is not always satisfactory, because their chemical composition is varied and even the smallest deviations in the chemical composition of the raw material may affect the quality of the final product - mineral wool. By replacing natural materials with prefabricated briquettes, it is possible to control the chemical composition of the raw material and, consequently, the quality of the final product.

Another reason for using pre-processed briquettes instead of raw natural materials is the possibility to optimize the particle size of the starting material. The particle size of the feed material in the furnaces is a key aspect in the melting process of the material in the furnace.

The most commonly used furnaces are traditional shaft furnace, gas shaft furnace and electrical furnace. In different types of furnaces, the thermal energy that liquefies the mineral raw material, is produced in different processes. In a traditional shaft furnace, the mineral raw material is charged together with the fuel, usually coke, which being burnt generates the energy necessary to liquefy the raw material. In a gas shaft furnace, heat is introduced by burning gas or another liquid fuel, and in an electric furnace, electrodes are used which extend into the furnace interior and produce the energy required to melt the mineral material filling the furnace.

If a shaft furnace is used to melt the raw material, it is permissible using only relatively thick feed material, since this fragmented has a tendency to form a compact mass in the furnace during melting. As a result, the flow of air and flue gases through the filling of the furnace is hindered. In addition, finely ground material is more difficult to process, including charging the feed into the furnace. Using finely ground raw material, a large amount of dust is also produced, which is a huge problem in a process requiring the use of electric furnaces. Therefore, it is not possible to fully use raw material originating from all possible sources, including waste material from mineral fiber waste or non-fibrous material, so-called sinters formed during the production of mineral wool. The result of this, of course, is an economic loss, but also a reduction in the available sources of mineral raw material.

### State of the art

Attempts have been made to solve the problem of the use of ground raw material by forming smaller mineral raw materials into briquettes. However, this involved the use of an additional material - a binder for the mineral raw material. For this purpose, hydraulic binders were used, mainly Portland cement, clay and water glass. The use of Portland cement makes briquette weak in resistance to high temperatures, it loses its strength and becomes brittle already in relatively low temperatures (400 - 500 °C), which causes the material to decay and be the same problem as unbound, ground raw material. Use of cement as a binder also brings with it a number of other negative effects, e.g. emissions of sulfur and carbon oxides, or the production of sediments clogging the shaft furnace chimney outlet.

It is known to use a binder for briquettes made of alkaline agent-activated slag. Such a slag has a glassy structure and is in the form of granules which are easily activated with an alkaline agent. Mineral briquettes produced according to this method show good strength properties, particularly with regard to moisture and good properties in the melting process itself.

Currently, the only method of recycling mineral wool waste is their briquetting and then returning them to the production process of re-production of the mineral wool of full value. Generated post-production waste of mineral wool cannot be returned directly to the production process on account of their physical properties. Small size of waste mineral wool and its low compressibility and loose bonding of the structure mean that the waste directly returned to the treatment would be ejected from the shaft furnace chimney by the action of a draft.

From the description of the patent application of the United States of America US6074967A, the method of processing of the material intended for manufacturing of rock wool is known, including the supply of waste, ground material, its mixing with the fibrous binding material and silicate containing sodium, calcium and/or aluminum, followed by forming such a mixture into solid briquettes. Fibrous binder preferably contains cellulose fibers, e.g. vegetable fibers.

From the description of the European patent application EP 2918555A1, a briquette is known intended for the production of rock wool, consisting of a raw material, a binder of that raw material and an activating agent to accelerate the curing process of briquetted raw material, while the raw material is waste rock wool having fiber morphology, and the binder is non-fibrous inorganic binder, such as sodium silicate, the percentage of which is from 3 up to 20 weight % in relation to the total weight of the raw material. As an activator, gas carbon dioxide is used. The raw material may additionally contain residual material and/or residual fuels.

### The essence of the invention

The subject of the patent is a briquette comprising mineral wool, preferably waste wool mineral wool, characterized in that it contains, in dry matter, up to 34% w/w of all alkali compounds derived from mineral wool and the additive of metal hydroxide or metal hydroxides selected from a group encompassing metals of the 1st and 2nd group of the periodic table, which are the sole binder of the briquette.

The subject of the invention is also a method for producing a briquette comprising wool mineral, preferably waste mineral wool, characterized in that the mineral wool is ground, homogenized and sieved through a sieve and the homogeneous mineral wool fibers of a size of less than 5 mm, and in particular not more than 2 mm, in an amount of from 50% to 90% w/w, are mixed with a binder in an amount of from 1% to 50% w/w, while the binder is an aqueous solution of at least one metal hydroxide selected from the group comprising metals of the 1st and 2nd group of the periodic table, concentration of which ranges from 5% to 50% w/w and then from the wet mass obtained, briquettes are formed, which are subjected to the process of maturation.

In one embodiment of the invention, mineral wool fibers are used that are sieved through a sieve with a mesh size of 5 mm, in particular 2 mm.

In another embodiment of the invention, an aqueous solution of at least one metal hydroxide selected from a group consisting of sodium, potassium, calcium and magnesium is used as the binder.

In a variant of the invention, the maturation process is carried out at a temperature of 1 to 800°C, at a relative humidity of 0 to 98% RH and the maturing process is carried out for at least 10 minutes.

In one embodiment of the invention, the briquettes produced, after the process of maturation, contain in the dry matter up to 34% w/w of all alkali compounds derived from mineral wool and metal hydroxides constituting a briquette's binder.

The subject of the invention is also a production line for carrying out a manufacturing method of a briquette comprising mineral wool, preferably waste mineral wool, characterized in that it contains a homogenizer fed with waste mineral wool equipped with a mill and sieves, the homogenizer being connected to a mixer additionally fed with a binder solution, and the mixer is provided with a line transporting the wet briquette mass to the forming device feeding formed wet briquettes for the maturation chamber, optionally provided with heating elements.

In one embodiment of the invention, the maturation chamber is connected with the means of transport with a warehouse of mature briquettes, and the forming device can be in the form of a vibropress, molding machine or forming line.

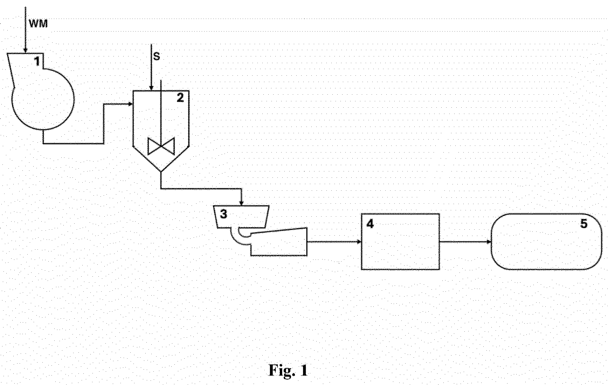

The subject of the invention in the form of a production line/plant, in an exemplary embodiment, is shown in Fig. 1 as a block diagram of consecutive interconnected sections of such a production line.

The essence of the invention is to produce briquettes from mineral wool waste, while a special composition of additives such as binders was used. Very simple composition of the binder was used - it is a solution of hydroxide, devoid of other additives. For the purposes of the invention, the briquette is to be understood as various types of mineral wool agglomerates or mixtures thereof, including pellets and granulates or other solid shapes formed by molding/pressing. The briquettes produced according to the invention are suitable primarily for the production of mineral wool, but all other applications are also possible, in which briquettes are primarily used due to excellent binding properties of the applied binder. In addition, the binder used in the invention allows for complete elimination of problems related to use of conventional briquette binders, and the manufacturing technology applied is more economical and ecological. Binder used in the briquette, according to the invention, contains only metal hydroxides and does not contain any other binders.

### Detailed description

The briquettes according to the invention are manufactured from two components: mineral wool, which can be added in the range of 50-90% w/w and binder in the form of aqueous solutions of metal hydroxides of the group s of the periodic table (1st and 2nd group of the periodic table), including from the group containing: sodium, potassium, lithium, magnesium and calcium hydroxides or their mixtures having a percentage concentration of from 1 to 50% w/w, for example from 5% to 50%, preferably from 10% to 25% w/w, while the indicated in the present invention quantitative compositions of the briquette are generally given in weight %.

In the method, according to the invention, from 1 to 50 weight % of said aqueous solution of hydroxide or mixtures hydroxides is thus added to the ground mineral wool, for example from 5% to 30% or from 10% to 25% of hydroxide aqueous solution. This combination ensures an optimal chemical composition that for mineral wool producers is of great importance. Chemical composition of briquettes is in more than 99% identical to the chemical composition of the finished mineral wool produced commercially from natural materials. In the table below, the chemical composition is presented of ecological briquettes produced by the method according to the invention from waste mineral wool and a hydroxide binder. In addition, briquettes produced by the presented method show exceptionally good properties of compressive strength, reaching values of at least 4 MPa, even from 4 MPa to 60 MPa.

**Table 1. Chemical composition of the briquettes according to the invention, made from waste wool mineral, according to Example 1 (variant with addition of 25% w/w of hydroxide sodium)**

| Briquette component | Content [%] w/w in the finished product |
|---|---|
| SiO₂ | 43.6 - 44.0 |
| Al₂O₃ | 15.3 - 15.5 |
| Fe₂O₃ | 7.1-7.3 |
| CaO | 17.2 - 17.6 |
| MgO | 7.9-8.1 |
| Na₂O | 3.4 - 3.8 |
| K₂O | 0.5 - 0.7 |
| SO₃ | 1.3 - 1.7 |
| TiO₂ | 1.2 - 1.6 |
| P₂O₂ | 0.1 - 0.3 |

The Table above presents the results of the tests of the chemical composition of the briquette obtained with the method according to the invention carried out by fluorescence X-ray spectrometry with wave dispersion. This is a commonly used method in the industry of mineral wool processing and formation of briquettes. The composition of the briquette includes, among others, values of alkali compounds (metal compounds from the 1st and 2nd group of the periodic table of elements) that should not be exceeded in briquette and method according to the invention.

Mineral wool is used in the form of waste in any form, originating from all industries where mineral wool is used/produced. Before use of any kind of wool, fibers, particles or sintered raw material must be of appropriate size and after sieving, should pass through sieves with a mesh of 5 mm, preferably less than 2 mm. The raw material that does not pass through the mesh is returned for further grinding and homogenization.

The only binder for the briquette according to the invention are solutions of metal hydroxides of the group s of the periodic table (1st and 2nd group of the periodic table of elements), for example: lithium, sodium, potassium, rubidium, cesium, beryllium, magnesium, calcium and strontium. The purpose of the binder is to bind mineral wool fibers by chemical reaction.

In the method according to the invention, in the first step, the mineral wool is ground and homogenized so that the fibers are homogeneous of similar size, preferably of less than 5 mm, in particular 2 mm and less than 2 mm. Homogeneous mineral wool raw material, preferably after sieving, should pass through sieves of mesh size 2 mm and less than 2 mm. The process is carried out under normal conditions.

The homogenized mineral wool fibers are then mixed with the binder in appropriate proportions to form a mixture - wet mass of briquette. The method according to the invention allows the production of the final product - dry briquette, using such amounts of ingredients that the wet mass has a reduced humidity or an increased humidity. The resulting mixture is then molded into a suitable shape with the use of different equipment and unit operations. In the next step the formed briquettes (briquette shapes) undergo a process of maturation in a temperature of 1 to 800°C, for example 10°C to 600°C, 10°C to 100°C or 40°C to 400°C, with a relative humidity of 0 to 98% RH, for example of 3 or 5 up to 80% RH.

After the maturing stage of the briquette, the wet mass is deprived almost completely of water, e.g. at least 90% of the water is evaporated, most preferably at least 95% of the water is evaporated from the briquette mass, so the dry product after maturing contains less than 5% of water.

After maturation, briquettes are characterized by physical and chemical properties enabling their use in the production process of mineral wool. They have adequate strength and do not disintegrate.

The method of producing the briquette according to the invention is carried out on an industrial scale using known but suitably adapted devices connected in a production line.

The production line according to the invention first comprises a homogenizer 1 fed as appropriate with suitably prepared raw material derived from waste mineral wool (WM) which is ground and sieved and possibly returned if it does not meet the requirements. Then the ground, homogenized mineral wool is supplied to mixer 2 additionally fed with binder (S), where mixing and homogenizing of mineral wool with binder is held. The briquette mass obtained in the mixer is supplied to the molding device 3 for shaping the glass wool mass in briquettes from which the wet briquettes are supplied into the maturation chamber 4, in which briquette shapes are bound, joined and dried. In the last stage, the aging (maturation) chamber is emptied and briquettes ready for processing into mineral wool of full value are fed to a warehouse 5 where briquettes are collected at the end of the technological process. The term warehouse 5 should also be understood as any space or device such as a packing line or a line for portioning and receiving/further transport of briquette.

### Example 1

Manufacture of briquettes from reduced humidity mass using the mild maturing conditions and NaOH or KOH as a binder.

The waste mineral wool is ground and homogenized into such a form that mineral wool particulates pass through the mesh of dimensions equal or less than 2 mm. An aqueous solution of the metal hydroxide is then prepared, in one variant of sodium, in the second variant of potassium at a concentration of 10% w/w in water. The water used does not have to be treated before (e.g. by distillation or demineralization). It should be clean and come from the water intake used for production of any other type of building material. Solution of hydroxide in water is mixed with suitably ground mineral wool in the proportions of 75% or 80% of wool and 25% or 20% of the hydroxide solution, respectively. The final content of all alkali compounds in dry product should not exceed 34%. After homogenization of the mixture (proper mixing of the mass), it is usually formed into a prism shape with a base of a regular hexagon of approximately volume of 1 dm³ (shape and volume of the briquette mold depends on the requirements for further treatment of briquettes to produce mineral wool). Moisture (water) content in the mass before maturing should, for example, be about 18 - 22%. In the last stage of the process, wet, molded mass is subjected to a maturation process. During this time, a chemical reaction occurs which binds the reactants and binds the mineral wool particles together into the finished product that meets the assumed criteria of chemical composition and strength properties. The maturation process leading to the creation of final product should take place under certain conditions allowing efficient production, preferably at a temperature and humidity not exceeding 130°C and 5% RH. In such ambient conditions, briquettes should be matured within the time of not less than 2 h (until achievement of the required strength properties). Finished briquette produced with this method should be stored in air-dry conditions until use in the process of production of mineral wool.

### Example 2

Production of briquettes from reduced humidity mass using the mild maturing conditions and NaOH or KOH as a binder.

The example uses a raw material (wet briquette mass) with higher humidity and a product meeting physicochemical and mechanical assumptions for the ecological briquettes was obtained. The waste mineral wool was ground and homogenized into a form that mineral wool particles after sieving pass through the mesh with dimensions equal or less than 2 mm. An aqueous solution of the metal hydroxide is then prepared, for example, in the first variant of sodium, and in the second variant of potassium, in a concentration of 10% w/w in water. The water used does not have to be treated previously (e.g. by distillation or demineralization). It should be clean and come from the applied water intake for the production of any other type of building material. After dissolution of the hydroxide in water, the resulting solution is mixed with suitably ground mineral wool in a proportion of 75% or 80% of wool and 25% or 20% of hydroxide solution (in the first variant of sodium and the second variant of potassium). Final content of all alkali compounds in the dry product should not exceed 34%. After homogenization the mixture (mixing the mass properly) it is poured into a mold in order to create a prism-shaped briquette with a base of a regular hexagon of volume about 1 dm³. Moisture (water) content in the wet mass before maturing should be about 18-22%. In the final stage of the process, the wet molded mass is subjected to a maturation process. At this time, a chemical reagents binding reaction takes place and mineral wool particles bonding into finished product that meet criteria for chemical composition and mechanical properties. Maturation process leading to the creation of the final product should take place in certain conditions allowing for efficient production, preferably at temperature and humidity not exceeding 55°C and 80-85% RH. Under such ambient conditions briquettes should mature within not less than 72 h (until the required strength properties are reached). Finished briquette produced using this method should be stored in air-dry conditions until used in the process of the production of mineral wool.

### Example 3

Production of briquettes from mass with increased humidity at slightly increased maturing temperature and NaOH or KOH as binder.

Raw materials with higher humidity were used and a product meeting the physicochemical and mechanical properties for ecological briquette. Waste mineral wool is ground and homogenized into a form such that the mineral wool particles after sieving pass through the mesh of dimensions equal to or less than 2 mm. An aqueous solution of the metal hydroxide is then prepared, in the first sodium variant, and in the second potassium variant, at a concentration of 25% w/w in water. Applied water does not have to be treated previously (e.g. by distillation or demineralization). It should be clean and come from the water intake used for the production of any other type of building material. After dissolving the hydroxide in water, the solution is mixed with properly ground mineral wool in the proportions of 70% wool and 30% hydroxide solution (in two variants). Final alkali compounds content in the dry product should not exceed 34% w/w. After homogenization of the mixture (proper mixing of the mass), it is poured into the mold to form a briquette in the correct shape (cubic, spherical, curved, rod-shaped, etc.) of a volume of approximately 1 dm³. The water content in the mass should be high enough so that it is possible to pour it into the mold while maintaining its viscosity and density. In the last stage of the process, the wet molded mass is subjected to a process of maturation. During this time, a chemical reaction occurs that binds the reactants and binding the particles of mineral wool in a finished product that meets the assumed criteria of chemical composition and mechanical properties. The maturing process leading to the creation of final product should take place under certain conditions allowing efficient production, preferably at temperature and humidity between 120 - 130°C and 0-5% RH. In such ambient conditions, briquettes should mature within not less than 2 h (until the required strength properties are reached). Finished briquette produced by this method should be stored in air-dry conditions for the time of use in the mineral wool production process.

### Example 4

Production of briquettes from high humidity mass at high temperature of maturation and NaOH as binder.

Briquette was produced using higher humidity raw materials and a product meeting physicochemical and mechanical assumptions for ecological briquette was obtained. The waste mineral wool was ground and homogenized to a form such that the particles of mineral wool shall pass through the mesh of size equal or less than 2 mm. An aqueous solution of the metal hydroxide is then prepared, for example sodium at a concentration of 25% w/w in water. The water used does not have to be treated previously (e.g. by distillation or demineralization). It should be clean and come from a water intake used for the production of any other type of building material. After dissolving the hydroxide in water, the solution is mixed with properly ground mineral wool in the proportions of 50% of wool and 50% of hydroxide solution. Final alkali content in dry briquette should not exceed 34%. After homogenization of the mixture (proper mixing of the mass), it is poured into a mold to form a briquette in the correct shape with an appropriate volume of approximately 1 dm³. The water content in the mass should be high enough to pour the mass into the mold, while maintaining its viscosity and density. In the final stage of the process, the wet molded mass is subjected to the maturing process. At this time, a chemical reaction occurs binding the reactants and bonding mineral wool particles into finished product that meets the assumed chemical composition criteria and mechanical properties. Maturation process leading to the creation of the final product should take place under certain conditions allowing for efficient production, preferably at temperature and humidity of 750 - 800°C and 0-3% RH. In such ambient conditions, briquettes should mature within not less than 10 min. Using the presented method of manufacturing briquettes, the temperature in which the material is to be matured should be gradually increased - it is necessary to apply a linear temperature increase over a specified period (the temperature increase should be distributed linearly over 48h). Thanks to this, the problem of "shrinkage" of the material caused by exposure of the wet briquette mass to high temperature and too rapid loss of water from the briquette mass (until the required strength properties are achieved), is eliminated. When the material reaches temperature of 800°C, it should also be gradually cooled, and the temperature reduction should also last a minimum of 12 hours. Finished briquette produced with this method should be stored in air-dry conditions until use in the production process of mineral wool.

## Claims

1. A briquette comprising mineral wool, preferably waste mineral wool, **characterized in that** it contains, in dry matter, up to 34% w/w of all alkali compounds derived from mineral wool and of added metal hydroxide or metal hydroxides selected from metals from groups including metal hydroxides of the 1st and 2nd group of the periodic table, which are the sole binder of the briquette.

2. Method for producing a briquette comprising mineral wool, preferably waste mineral wool, **characterized in that** the mineral wool is ground, homogenized and sieved through a sieve and homogeneous mineral wool fibers with sizes of less than 5 mm, and in particular not more than 2 mm, in an amount of 50% up to 90% w/w, mixed with a binder in an amount of from 1% to 50% w/w, while the binder has the form of an aqueous solution of at least one metal hydroxide selected from group comprising metals of the 1st and 2nd group of the periodic table, the concentration of which ranges from 5% to 50% w/w, and then from the wet mass obtained, briquettes are formed, which are subjected to the process of maturation.

3. The method according to reservation 2. **characterized in that** mineral wool fibers are sieved with a mesh size of 5 mm, in particular 2 mm.

4. The method according to reservation 2 or 3, **characterized in that** the binder is aqueous solution of at least one metal hydroxide selected from group including sodium, potassium, calcium and magnesium.

5. The method according to reservation 2 or 3 or 4, **characterized in that** a process of maturing is conducted at a temperature of 1 to 800°C, with relative humidity of 0 to 98% RH.

6. The method according to any one of reservations 2 to 5, **characterized in that** the maturation process is carried out for at least 10 minutes.

7. A method according to any of reservations from 2 to 6, **characterized in that** the briquettes produced, after the maturation process, contain in the dry matter up to 34% w/w of all alkali compounds derived from mineral wool, and metal hydroxides that are the binder of briquette.

8. Production line for carrying out a briquette production method comprising mineral wool, preferably waste mineral wool, **characterized in that** it contains a homogenizer (1) fed with waste mineral wool and provided with a mill and sieves, while the homogenizer (1) being connected to the mixer (2) additionally fed with a binder solution, and the mixer (2) is provided with a line transporting the wet briquette mass to the forming device (3) feeding molded wet briquettes for the maturation chamber (4), optionally provided with heating elements.

9. Production line according to the reservation 8, **characterized in that** a maturation chamber (4) is connected by means of transport with the warehouse (5) of mature briquettes.

10. Production line according to reservation 8, **characterized in that** the forming device can be in the form of a vibropress, molding machine or forming line.
